# FASCICULE DE BREVET EUROPEEN

(11) **EP 1 244 049 B1**
(45) Date de publication et mention de la délivrance du brevet: **31.12.2008**
(21) Numéro de dépôt: 01810307.7
(22) Date de dépôt: 23.03.2001
(51) Int. Cl.: G06K 7/00

(54) **Système de communication sans fil entre plusieurs émetteurs-récepteurs et des transpondeurs**
Drathloses Kommunikationssystem zwischen mehreren Transceivern und Transpondern
Wireless communication system between a plurality of transceivers and transponders

(43) Date de publication de la demande: 25.09.2002
(73) Titulaire: EM Microelectronic-Marin SA, 2074 Marin (CH)
(72) Inventeur: Degrauwe, Marc, 2025 Chez-le-Bart (CH); Desjeux, Olivier, 2525 Le Landeron (CH)
(74) Mandataire: Surmely, Gérard

(56) Documents cités:
- EP-A- 0 589 046
- EP-A- 1 022 674
- US-A- 5 804 810

## Description

La présente invention concerne un système et un procédé de communication sans fil entre une pluralité de récepteurs-émetteurs, agencés respectivement dans une pluralité d'espaces délimités présentant chacun au moins une entrée, et des unités électroniques portables équipées de moyens de radiocommunication avec ladite pluralité de récepteurs-émetteurs, notamment en vue d'une détection de chacune de ces unités électroniques qui pénètrent dans l'un desdits espaces délimités. Par entrée, il faut comprendre de manière large toute porte ou chemin de passage donnant accès à un espace délimité considéré.

La présente invention concerne plus particulièrement un système et un procédé de communication entre des personnes ou objets équipés desdites unités électroniques portables et une pluralité de récepteurs-émetteurs agencés dans une pluralité d'espaces délimités voisins ou situés à proximité l'un de l'autre. On notera que les espaces délimités peuvent être des lieux fixes, tels des zones délimitées d'un parc d'attraction ou d'un centre sportif, ou être mobiles comme des compartiments ou wagons d'un moyen de transport public.

Il est connu de la demande de brevet EP 1 065 625 un système de détection d'individus ou d'objets munis de transpondeurs ou tickets électroniques. Selon le procédé décrit dans ce document, il est prévu une communication à l'entrée de l'espace délimité à basse fréquence, notamment de l'ordre d'une centaine de KHz, permettant une communication localisée entre un émetteur ou lecteur et les transpondeurs portables. Ensuite, il est prévu une communication à haute fréquence entre un récepteur-émetteur à haute fréquence, notamment de l'ordre des centaines de MHz ou plus, situé à l'intérieur de l'espace délimité et les transpondeurs situés dans cet espace lorsque les portes d'accès à cet espace sont fermées. Toutefois, une communication à haute fréquence peut intervenir à tout moment dès que les transpondeurs sont réveillés et que l'éloignement entre ces transpondeurs et un émetteur-récepteur fixe de l'espace délimité est inférieur à la distance maximale de communication. Ainsi, une telle communication à haute fréquence peut être engendrée aussi lors de la sortie de l'espace délimité.

Les transpondeurs utilisés sont généralement du type actif, c'est-à-dire comprenant leur propre source d'énergie. Ces transpondeurs actifs ou étiquettes électroniques ou encore cartes électroniques sans contact sont nommés par la suite "unités électroniques portables". Comme cela est représenté dans la demande EP 1 065 625, les unités électroniques portables sont équipées de moyens de communication à basse fréquence et de moyens de communication à haute fréquence. De préférence, les unités électroniques sont en état de veille à basse fréquence et sont réveillées par une réception d'un signal à basse fréquence émis dans les régions d'entrée-sortie, la communication à haute fréquence suivant selon un protocole de communication donné.

Le document US 5,804,810 propose un système dans lequel le récepteur-émetteur associé à un wagon donné reçoit une information quant aux conteneurs introduits dans ce wagon. De même, les tags associés à ces conteneurs reçoivent une information quant au wagon dans lequel ils se trouvent où dans lequel ils vont être introduits. Ceci est effectué par un opérateur du système de transport lors du remplissage des wagons (voir colonne 60, lignes 39 à 46). Ainsi, le récepteur-émetteur connaît l'identité des conteneurs introduits à l'intérieur du wagon où il est agencé. De même, les conteneurs ont reçu l'information du wagon dans lequel ils doivent voyager. Il n'y a donc pas ici de problème d'interaction avec des conteneurs agencés dans d'autres wagons formant le même train ou d'un autre train adjacent. Le seul enseignement donné concernant la fréquence de communication est celui-ci : si lors d'une période de communication entre un récepteur-émetteur et des tags situés dans un wagon donné il y a un problème d'interférence, alors le récepteur-émetteur sélectionne un autre canal de communication et informe lui-même les tags associés aux conteneurs, qu'il sait être dans le wagon où il est agencé, du nouveau canal de communication.

En particulier, dans le cas où un récepteur-émetteur donné ne connaissait pas à l'avance les tags ou unités électroniques situés dans l'espace délimité qui lui est associé, rien n'empêcherait alors des tags ou unités électroniques situés dans d'autres wagons voisins de recevoir l'information concernant le nouveau canal de communication choisi et de communiquer avec le récepteur-émetteur dans la mesure où ces tags ou unités électroniques sont situés dans la région de communication du récepteur- émetteur considéré.

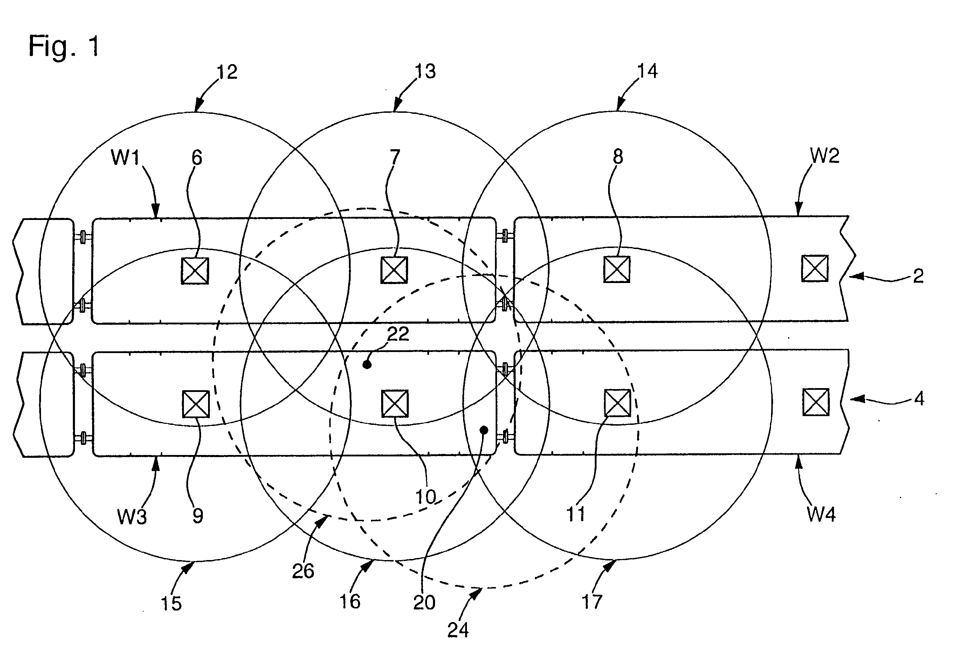

Dans le cadre de la présente invention, les inventeurs ont détecté un problème lié à la communication à haute fréquence lorsqu'il s'agit de surveiller l'accès à et/ou la présence dans plusieurs espaces délimités voisins comme cela est représenté à la figure 1. Dans cette figure sont représentés schématiquement et partiellement les wagons W1 et W2 d'un premier train 2 et les wagons W3 et W4 d'un deuxième train 4 situé sur une voie parallèle voisine, comme cela peut se présenter notamment dans une gare. A l'intérieur des wagons sont agencés des émetteurs-récepteurs à haute fréquence 6 à 11. De manière tout à fait schématique, les zones à l'intérieur desquelles les unités électroniques portables 20, 22 peuvent recevoir un signal de l'un des émetteurs-récepteurs 6 à 11 sont représentées par des cercles 12 à 17. De même, les régions dans lesquelles des unités 20 et 22 émettant à haute fréquence un signal pouvant être reçu par les émetteurs-récepteurs sont représentées schématiquement par des cercles 24 et 26 en lignes interrompues.

Il ressort de la figure 1 que l'unité portable 20 peut avoir une communication à haute fréquence bidirectionnelle avec les émetteurs-récepteurs 10 et 11 situés dans deux wagons adjacents du train 4. L'unité portable 22 située dans le wagon W3 peut avoir une communication bidirectionnelle avec les émetteurs-récepteurs 7 et 10 situés respectivement dans les wagons W1 et W3 appartenant respectivement aux deux trains 2 et 4. On comprend ainsi que, en l'absence d'autres précautions, des communications peuvent être établies entre une unité portable située dans un wagon et des émetteurs-récepteurs fixes situés dans d'autres wagons. Ceci peut d'une part conduire à des communications non désirées et en particulier à une détection erronée de la présence de personnes ou d'objets dans un espace délimité donné. D'autre part, même si des précautions sont prises pour éviter une détection erronée, notamment par la présence d'émetteurs ou lecteurs à basse fréquence agencés aux entrées des espaces délimités, les différents champs électromagnétiques émis par les divers émetteurs-récepteurs fixes et par les unités électroniques portables engendrent des interactions non désirées et notamment un brouillage des communications prévues lorsque l'ensemble des émetteurs-récepteurs fonctionnent à une même fréquence. Cette solution paraît pourtant à première analyse nécessaire étant donné que les unités portables peuvent pénétrer dans l'un ou l'autre des espaces délimités, sans que cela puisse être prédéterminé puisque le système de communication sert notamment, dans un mode préféré, à la détection et/ou la localisation de personnes dans des moyens de transport ou des zones voisines délimitées d'un bâtiment.

Un but de la présente invention est de résoudre le problème exposé ci-dessus tout en fournissant un système et un procédé de communication efficace pouvant en particulier servir à la détection de personnes équipées d'unités électroniques portables et susceptibles de pénétrer dans l'un quelconque d'une pluralité d'espaces délimités équipés de moyens de communication à haute fréquence, par exemple supérieur à 3 MHz.

A cet effet, l'invention concerne premièrement un système de communication tel que définit précédemment et **caractérisé en ce que** la pluralité de récepteurs-émetteurs et les unités électroniques portables sont agencés pour pouvoir communiquer, parmi un ensemble de fréquences données et/ou de sous-ensembles de fréquences respectivement associés à ces fréquences, dans une quelconque fréquence et/ou un sous-ensemble de fréquences associé, et en ce que chacun desdits récepteurs-émetteurs est associé à des moyens d'occupation d'une fréquence propre qui comprennent :
- des moyens d'écoute agencés pour déterminer si, dans une période préliminaire à une période de communication avec des unités électroniques, un signal d'occupation est présent sur l'une quelconque fréquence parmi ledit ensemble de fréquence et/ou si un seuil d'amplitude donné est dépassé à la réception de cette fréquence;
- des moyens d'émission agencés pour émettre dans une quelconque fréquence dudit ensemble de fréquences, et
- des moyens pour sélectionner, dans ladite période préliminaire, une fréquence propre parmi ledit ensemble de fréquences qui ne contient pas de signal d'occupation ou dont le niveau d'amplitude reçu est inférieur audit seuil.

Il est en outre prévu que les moyens d'émission émettent dans la fréquence propre sélectionnée un signal d'occupation de cette fréquence propre au moins de manière périodique jusqu'au début de ladite période de communication suivante et durant celle-ci, le système de communication ayant des moyens pour communiquer une information relative à la fréquence propre sélectionnée aux unités électroniques portables entrant et/ou sortant et/ou situées dans l'espace délimité à l'intérieur duquel est agencé le récepteur-émetteur considéré.

Dans un mode de réalisation préféré, les moyens d'écoute et les moyens d'émission sont activés alternativement dans une quelconque fréquence dudit ensemble de fréquence pour déterminer si cette fréquence est libre et signaler l'intention de l'occuper. Dans une variante préférée, la sélection d'une fréquence propre pour un récepteur-émetteur n'intervient qu'après plusieurs alternances d'activation des moyens d'écoute et des moyens d'émission, sans que cette fréquence soit reçue par les moyens d'écoute. Pour éviter que des moyens d'occupation d'une fréquence propre associés à deux espaces délimités voisins qui s'enclenchent simultanément, notamment à l'ouverture des portes d'un moyen de transport, ne conduisent à une superposition des périodes d'émission et d'écoute, il est prévu de préférence que la période d'activation des moyens d'écoute soit différente pour des moyens d'occupation associés à des récepteurs-émetteurs agencés dans des espaces délimités voisins.

Ainsi, pour que le système selon l'invention fonctionne, il est nécessaire que les unités électroniques portables soient agencées de manière à pouvoir communiquer dans une quelconque fréquence parmi ledit ensemble de fréquence susmentionné ou dans des sous-ensembles associés à ces fréquences, comme cela sera expliqué encore plus en détail ci-après. L'homme du métier sait concevoir de telles unités dont la fréquence de communication peut être réglée et sélectionnée parmi plusieurs canaux prédéterminés.

Dans un mode de réalisation préféré, la fréquence propre sélectionnée par un ou plusieurs récepteurs-émetteurs situés dans un espace délimité donné est communiquée aux unités portables entrant et éventuellement sortant par un ou plusieurs émetteurs à basse fréquence agencés aux entrées de la pluralité d'espaces délimités associés au système de communication selon l'invention. La communication à basse fréquence est localisée dans la région des entrées de sorte que seules les unités portables qui passent par les entrées, dans un sens ou l'autre, peuvent recevoir une information quant à la fréquence propre sélectionnée. Ainsi, lorsqu'une unité électronique est réveillée par un émetteur à basse fréquence situé à proximité d'une entrée à un espace délimité donné, cet émetteur envoie un signal d'information concernant lequel des canaux de communication à haute fréquence doit être utilisé ultérieurement selon un protocole de communication prédéfini.

L'invention concerne également un procédé de communication entre une pluralité de récepteurs-émetteurs, agencés respectivement dans des espaces délimités voisins l'un de l'autre ou susceptibles de l'être au moins temporairement et des unités électroniques portables susceptibles de pénétrer dans ces espaces. Ce procédé prévoit pour chaque récepteur-émetteur les étapes suivantes dans une période préliminaire à une période de communication à haute fréquence :
- écoute dans une première fréquence dudit ensemble de fréquences pour déterminer si un signal d'occupation est présent sur cette première fréquence et/ou si un seuil d'amplitude donné est reçu pour cette première fréquence;
- changement de canal pour écouter sur une autre fréquence dudit ensemble si un signal d'occupation est reçu sur ladite première fréquence ou si le niveau d'amplitude reçu pour cette première fréquence est supérieur au seuil; et ceci jusqu'à ce qu'une fréquence soit libre, laquelle est alors sélectionnée comme fréquence propre. Ce procédé comprend en outre les étapes suivantes :

- envoi d'un signal d'occupation de ladite fréquence propre sélectionnée, de manière à ce qu'elle ne soit pas prise ultérieurement par d'autres récepteurs-émetteurs agencés dans des espaces délimités voisins, au moins jusqu'au début d'une période de communication suivante et durant celle-ci, la communication durant cette période étant prévue à la fréquence propre sélectionnée et/ou dans un sous-ensemble de fréquences associé à cette fréquence propre;
- communication aux unités électroniques entrant et/ou sortant et/ou situées dans l'espace délimité considéré la fréquence propre sélectionnée pour une communication à haute fréquence durant ladite période de communication suivante.

Selon une variante préférée, il est prévu que, dès qu'une fréquence propre est sélectionnée, les moyens d'émission émettent sans interruption un signald'occupation d'occupation de cette fréquence propre de manière périodique ou continue.

Grâce au procédé de communication selon l'invention, il est possible de sélectionner de manière sûre une fréquence libre comme fréquence propre de communication pour un émetteur-récepteur ou des émetteurs-récepteurs associés à un même espace délimité. En effet, le procédé selon l'invention permet de déterminer efficacement si une fréquence est libre et d'informer correctement d'autres moyens d'occupation associés à d'autres récepteurs-émetteurs du fait de la sélection d'une fréquence donnée pour permettre à ces autres moyens d'occupation de ne pas sélectionner une fréquence déjà prise.

D'autres caractéristiques et avantages de la présente invention ressortiront également de la description suivante, faite en référence aux dessins annexés donnés à titre d'exemple nullement limitatif, dans lesquels :
- la figure 1 déjà décrite, représente schématiquement des wagons de deux trains équipés d'émetteurs-récepteurs à haute fréquence pour une communication sans fil avec des unités portables munies de leur source d'énergie;
- la figure 2 montre schématiquement un mode de réalisation de moyens d'occupation d'une fréquence propre associé à un récepteur-émetteur;
- la figure 3 représente l'alternance d'activation de moyens d'écoute et de moyens d'émission de deux moyens d'occupation associés à deux récepteurs-émetteurs agencés respectivement dans deux espaces délimités ;
- la figure 4 représente schématiquement l'agencement d'un espace délimité selon un mode de réalisation préféré;
- la figure 5 montre schématiquement la mise en oeuvre d'un protocole d'anticollision pour plusieurs récepteurs-émetteurs à haute fréquence pouvant être implémenté dans le procédé de communication selon l'invention.

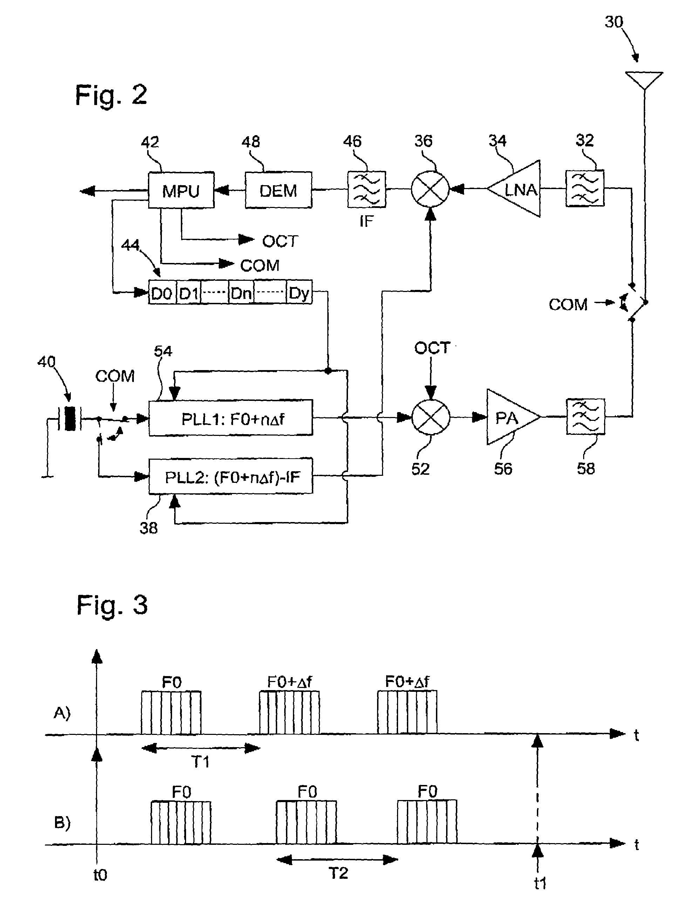

A la figure 2 est représenté un mode de réalisation de moyens d'occupation d'une fréquence propre associés à un récepteur-émetteur d'un système de communication selon l'invention. Ces moyens d'occupation comprennent une antenne 30 pouvant être utilisée dans un mode d'écoute ou dans un mode d'émission. Les moyens d'occupation comprennent des moyens d'écoute formés par un filtre passe-bande 32 et un amplificateur 34 à faible bruit (LNA). Le signal sortant de l'amplificateur 34 est fourni à un multiplicateur 36 qui reçoit également en entrée un signal sinusoïdal d'une fréquence (F0+nΔf) - IF fourni par une boucle à verrouillage de phase 38 (PLL 2). Le circuit 38 reçoit en entrée un signal temporel fourni par une base de temps 40. Selon l'invention, plusieurs canaux de fréquence sont à disposition des différents récepteurs-émetteurs. Cet ensemble de fréquences est donné par : F0+nΔf, n=1, .., y. On notera ici que cet ensemble de fréquence peut servir uniquement à la recherche d'un canal libre, la communication entre le récepteur-émetteur et les unités électroniques portables étant effectuée dans un sous-ensemble de fréquences associé à la fréquence F0+nΔf.

La sélection de n, c'est-à-dire d'une fréquence quelconque parmi l'ensemble de fréquences à disposition est effectuée par un microprocesseur 42 (MPU) qui envoie un signal d'adressage à un registre 44 contenant pour chaque adressage n, n=0, 1, .., y, un diviseur Dn correspondant qui est fourni au circuit 38. Ce circuit envoie donc un signal de fréquence (F0+nΔf)-IF au multiplicateur 36, IF étant une fréquence intermédiaire, par exemple 455kHz, correspondant à la fréquence centrale du filtre à bande étroite 46. Le filtre 46 fournit en sortie un signal dont la fréquence correspond à la différence entre la fréquence du signal fourni par l'antenne 30 et la fréquence du signal fourni par le circuit 38. Le filtre 46 est choisi pour que la largeur de bande soit inférieur à Δf de manière à pouvoir distinguer les différents canaux de communication prévus.

Le signal filtré est ensuite fourni à un démodulateur 48 (DEM), le signal démodulé étant fourni au microprocesseur 42 pour son traitement ; notamment pour déterminer si un signal d'occupation est reçu pour une certaine fréquence, c'est-à-dire pour un certain n. Si pour un canal de fréquence donné, aucune tonalité n'est reçue durant une période d'écoute ou si un signal reçu présente une amplitude inférieure à un seuil donné, l'unité 42 envoie un signal de commande COM pour commuter sur des moyens d'émission d'un signal d'occupation de ce canal. Parallèlement, l'unité 42 fournit un signal de modulation OCT à un multiplicateur 52 qui reçoit également en entrée un signal de fréquence fourni par une boucle à verrouillage de phase 54 (PLL 1). Ce circuit 54 engendre un signal sinusoïdal à la fréquence F0 + nΔf définissant une porteuse pour le signal d'occupation émis. De manière classique, le signal sortant du muliplicateur 52 est amplifié par un amplificateur de puissance 56 et passe à travers un filtre 58 avant d'être émis par l'antenne 30.

Selon un mode de réalisation préféré de l'invention, il est prévu d'alterner l'activation des moyens d'écoute et des moyens d'émission un certain nombre de fois pour un canal libre sélectionnable. Ceci permet de s'assurer que le canal est libre tout en envoyant l'information de l'intention d'occuper le canal sur lequel on ne reçoit aucun signal d'occupation.

Ce procédé de sélection d'une fréquence disponible parmi un ensemble de fréquences prévues intervient dans une période préliminaire à une période de communication entre le récepteur-émetteur considéré et des unités électroniques portables. De préférence, le canal de fréquence testé le premier correspond à celui utilisé lors d'une période de communication précédente. En effet, la probabilité que ce canal de fréquence soit à nouveau disponible est relativement élevée. Cela sera toujours le cas lorsque les espaces délimités voisins conservent des positions relatives fixes dans le temps. Ceci est le cas pour différentes zones d'un parc d'attraction et également pour les divers wagons d'un train déjà formé. Par contre, lorsqu'un train est nouvellement formé, la première période préliminaire à une première période de communication servira à chaque espace délimité de sélectionner une fréquence propre différente.

Si lors d'une période d'écoute, le dispositif représenté à la figure 2 détecte l'occupation du canal de fréquence testé, le microprocesseur 42 change l'adressage n du registre 44 pour sélectionner un nouveau canal d'écoute. Ici au moins deux variantes peuvent être envisagées. La première variante consiste à avoir des périodes d'écoute et d'émission qui sont fixes, même lorsque le canal de fréquence est varié. Ainsi, la période d'écoute pour un nouveau canal testé correspond sensiblement au temps d'écoute restant lors de la réception d'un signal d'occupation. Dans la seconde variante, la réception d'un signal d'occupation initialise à nouveau une période d'écoute complète pour le nouveau canal testé avant la période d'émission d'un signal. De préférence, le procédé de sélection d'une fréquence propre dans une phase préliminaire à une communication à haute fréquence commence par une période d'écoute. Toutefois, dans une variante, on peut prévoir d'activer premièrement les moyens d'émission dans une certaine fréquence.

La sélection d'un nouveau canal en cas d'occupation du canal testé peut se faire de différentes manières. Dans une première variante, on passe simplement au canal supérieur, c'est-à-dire à n + 1 et pour n = y, on passe à n = 0. Dans une autre variante, on peut prévoir d'autres algorithmes pour générer la valeur de n suivante, notamment un algorithme pseudo-aléatoire.

On notera ici que l'agencement des moyens d'occupation d'une fréquence propre représenté à la figure 2 n'est nullement limitatif et que l'homme du métier peut prévoir d'autres agencements sans sortir du cadre de la présente invention.

A la figure 3 est représentée schématiquement l'alternance de périodes d'émission et de périodes d'écoute dans ladite phase préliminaire pour deux moyens d'occupation d'une fréquence propre associée respectivement à deux récepteurs-émetteurs agencés dans deux espaces délimités voisins. La phase préliminaire commence ici sensiblement simultanément au temps t0 et finit au temps t1. Dans le graphe supérieur A, la période d'alternance des moyens d'émission et des moyens d'écoute est T1 alors que dans le graphe inférieur B, cette période est égale à T2. Selon une caractéristique particulière de l'invention, T1 et T2 sont prévus différents pour différents moyens d'occupation d'une fréquence. Ceci permet d'éviter qu'un enclenchement simultané des phases préliminaires, notamment avant l'ouverture des portes d'un moyen de transport, aie pour conséquence une superposition des périodes d'écoute et des périodes d'émission qui empêcherait la sélection de fréquences propres.

Dans l'exemple de la figure 3, bien que les premiers moyens correspondant au graphe A commencent d'émettre juste avant les deuxièmes moyens correspondant au graphe B, on voit que ce sont les premiers moyens qui détectent un signal d'occupation de la fréquence F0. Par conséquent, ces premiers moyens passent à la fréquence F0 + Δf. En l'absence de réception d'autres signaux d'occupation, à la fin de la phase préliminaire, les premiers moyens auront donc sélectionnés la fréquence F0 + Δf alors que les deuxièmes moyens auront sélectionnés la fréquence F0.

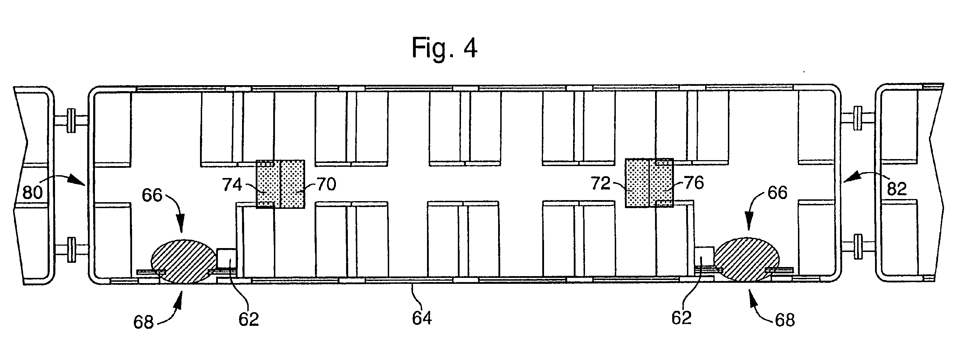

Une fois une fréquence propre sélectionnée, il est nécessaire de communiquer le canal correspondant aux unités électroniques portables entrant et/ou sortant et/ou situées à l'intérieur d'un espace délimité considéré. Comme représenté à la figure 4, il est avantageusement possible de communiquer cette information dans les zones d'entrée au moyen d'un émetteur 62 agencé dans le wagon 64 qui émet un signal à basse fréquence dans la région 66 localisée à l'entrée 68 et traversant cette dernière. A l'intérieur du wagon 64 sont agencés deux récepteurs-émetteurs à haute fréquence 70 et 72 associés à des moyens d'occupation d'une fréquence propre ayant deux antennes 74 et 76. Diverses variantes de réalisation peuvent être prévues en fonction de la configuration des espaces délimitées et de l'agencement des récepteurs-émetteurs 70 et 72. Les antennes 74 et 76 peuvent être situées dans les boîtiers des récepteurs-émetteurs HF. Dans une autre variante par contre, les antennes 74 et 76 sont agencées dans des boîtiers séparés des récepteurs-émetteurs HF et situées par exemple à plus courte distance des parois transversales 80 et 82 du wagon 64. En agençant les antennes 74, 76 relativement proches des parois 80, 82, on couvre mieux les régions voisines des deux wagons adjacents au wagon 64. Ceci peut permettre une plus grande efficacité au procédé de sélection de fréquences propres différentes pour des espaces délimités voisins.

On peut prévoir notamment des puissances d'émission et/ou des sensibilités supérieures pour les moyens d'occupation d'une fréquence propre relativement au récepteur-émetteur HF prévu pour les communications avec les unités électroniques portables.

Bien entendu, les unités 70 et 72 peuvent ne former que des antennes HF reliées à une unité électronique centrale pour le wagon 64.

Dans une variante préférée du procédé de communication selon l'invention, dès qu'une fréquence propre est sélectionnée dans la période préliminaire, les moyens d'émission desdits moyens d'occupation continuent d'émettre sans interruption un signal d'occupation à cette fréquence propre, de manière périodique ou continue, jusqu'au début de la période de communication prévue et durant cette dernière. Durant la période de communication, les moyens d'écoute d'un signal d'occupation sont désactivés. L'envoi du signal d'occupation de la fréquence propre lors d'une période de communication peut être réalisé de manière périodique comme dans la phase préliminaire ou de manière continue ou quasi continue étant donné qu'il n'est plus prévu alors de périodes d'écoute.

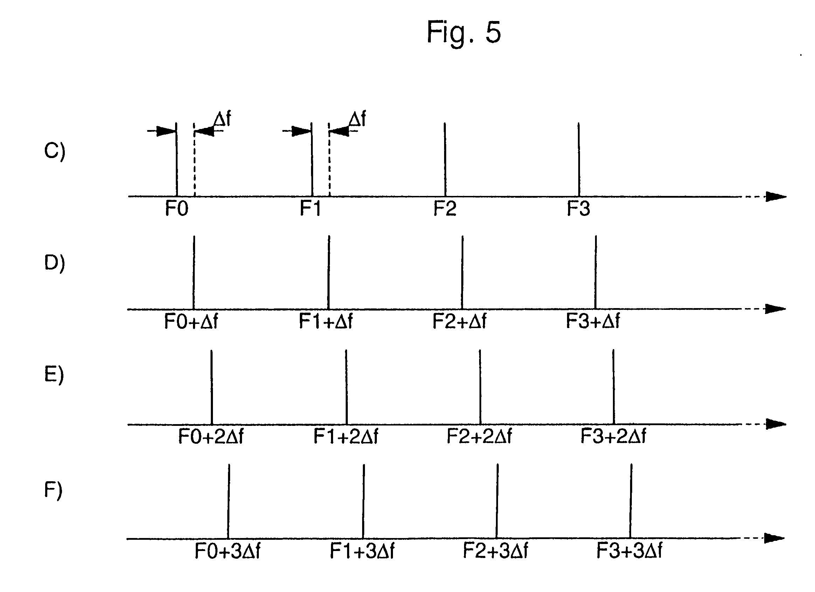

Finalement, à la figure 5 est représenté schématiquement et partiellement un protocole de communication prévu avec les unités électroniques portables. Avantageusement, il est prévu plusieurs canaux de communication pour chaque récepteur-émetteur de manière à augmenter l'efficacité d'un protocole d'anticollision. Les graphes C, D, E, F correspondent respectivement aux fréquences propres sélectionnées par quatre récepteurs-émetteurs HF agencés dans 4 espaces délimités différents. Les sous-ensembles de fréquences associées à ces fréquences propres sont prévues pour la communication avec les unités électroniques portables.

Ainsi, pour le récepteur-émetteur correspondant au graphe C, la fréquence propre sélectionnée est F0. Les fréquences de communications sont F1, F2, F3,..., Fx. Les fréquences F0 à Fx sont réparties uniformément. Pour les autres récepteurs-émetteurs, les canaux prévus pour la communication sont décalés relativement à F1-Fx d'une valeur correspondant au décalage de la fréquence propre sélectionnée relativement à F0, à savoir Δf, 2 Δf et 3Δf. Ainsi, chaque fréquence propre sélectionnable est associée à un sous-ensemble de fréquences qui sont différentes des fréquences des autres sous-ensemble de fréquences prévues pour la communication HF et également différentes des fréquences de l'ensemble des fréquences propres utilisées pour les signaux d'occupation.

## Revendications

1. Système de communication entre une pluralité de récepteurs-émetteurs (7, 8, 10, 11), agencés respectivement dans une pluralité d'espaces délimités (W1, W2, W3, W4) présentant chacun au moins une entrée, et des unités électroniques portables (20, 22) équipées de moyens de radiocommunication avec ladite pluralité de récepteurs-émetteurs, notamment en vue d'une détection de chacune de ces unités électroniques qui pénètre dans un desdits espaces délimités, **caractérisé en ce que** lesdits récepteurs-émetteurs et lesdites unités électroniques sont agencées pour pouvoir communiquer, parmi un ensemble de fréquences données (F0 + nΔf) et/ou de sous-ensembles de fréquences respectivement associés à ces fréquences, dans une quelconque fréquence et/ou un sous-ensemble de fréquences associé, chacun desdits récepteurs-émetteurs étant associé à des moyens d'occupation d'une fréquence propre qui comprennent :
- des moyens d'écoute (30, 32, 34, 36, 38, 46, 48) agencés pour déterminer si, dans une période préliminaire à une période de communication avec des unités électroniques, un signal d'occupation est présent sur une quelconque fréquence parmi ledit ensemble de fréquences et/ou si un seuil d'amplitude donné est dépassé en réception pour cette fréquence;
- des moyens d'émission (30, 52, 54, 56, 58) agencés pour émettre dans une quelconque fréquence dudit ensemble de fréquences; et
- des moyens pour sélectionner (42, 44, 38, 54) dans ladite période préliminaire une fréquence propre parmi ledit ensemble de fréquences qui ne contient pas de signal d'occupation ou dont le niveau d'amplitude reçu est inférieur audit seuil; lesdits moyens d'émission émettant dans la fréquence propre sélectionnée un signal d'occupation de cette fréquence propre au moins de manière périodique jusqu'au début de ladite période de communication suivante et durant celle-ci, ce système ayant des moyens (62) pour communiquer une information relative à ladite fréquence propre aux unités portables entrant et/ou sortant et/ou situées dans l'espace délimité à intérieur duquel est agencé le récepteur-émetteur considéré.

2. Système selon la revendication 1, **caractérisé en ce que** lesdits moyens pour sélectionner une fréquence propre comprennent des moyens de commande (42) pour activer alternativement lesdits moyens d'écoute et lesdits moyens d'émission dans une quelconque fréquence dudit ensemble de fréquences et des moyens (44, 38, 54) pour passer à une autre fréquence de cet ensemble dès que ledit signal d'occupation de cette fréquence est reçu par lesdits moyens d'écoute ou que le niveau de puissance reçu sur cette fréquence est supérieur audit seuil.

3. Système selon la revendication 2, **caractérisé en ce que** la sélection d'une fréquence propre est opérée seulement après plusieurs alternances d'activation desdits moyens d'écoute et moyens d'émission, sans que cette fréquence soit reçue par lesdits moyens d'écoute.

4. Système selon la revendication 2 ou 3, **caractérisé en ce que** la période d'activation desdits moyens d'écoute est prévue différente pour chaque récepteur-émetteur dudit système.

5. Système selon l'une des revendications précédentes, **caractérisé en ce que** ledit ensemble de fréquence est situé dans les hautes fréquences, ladite fréquence propre sélectionnée pour un récepteur-émetteur étant communiquée aux unités électroniques à basse fréquence par un ou plusieurs émetteurs placés respectivement à ladite entrée ou aux entrées de l'espace délimité de ce récepteur-émetteur.

6. Système selon l'une des revendications précédentes, **caractérisé en ce que** lors de ladite phase préliminaire, lesdits moyens d'écoute sont activés premièrement dans une fréquence ayant servi à une période de communication précédente.

7. Système selon l'une des revendications précédentes, **caractérisé en ce que** chaque fréquence dudit ensemble de fréquence est associée à un sous-ensemble de fréquences qui sont différentes des fréquences des autres sous-ensembles de fréquences et également différentes des fréquences dudit ensemble de fréquence, de manière à permettre la mise en oeuvre d'un protocole d'anticollision qui répartit les fréquences de communication avec lesdites unités électroniques sur un sous-ensemble de fréquences associées à ladite fréquence propre.

8. Procédé de communication entre des récepteurs-émetteurs (7, 8, 10, 11), agencés respectivement dans des espaces délimités voisins l'un de l'autre (W1, W2, W3, W4) ou susceptibles de l'être au moins temporairement et des unités électroniques portables (20, 22) équipées de moyens de radiocommunication et susceptibles de pénétrer dans ces espaces délimités, lesdits récepteurs-émetteurs et lesdites unités électroniques étant agencées pour permettre une communication à haute fréquence, parmi un ensemble de fréquences données et/ou de sous-ensembles de fréquences respectivement associés à ces fréquences, dans une quelconque fréquence (F0 + nΔf) et/ou un sous-ensemble de fréquences associé, ce procédé ayant pour chaque récepteur-émetteur les étapes suivantes dans une période préliminaire à une période de communication à haute fréquence :
- écoute dans une première fréquence dudit ensemble de fréquences pour déterminer si un signal d'occupation est présent sur cette première fréquence et/ou si un seuil d'amplitude donné est dépassé pour cette première fréquence;
- changement de canal pour écouter sur une autre fréquence dudit ensemble de fréquences si un signal d'occupation est reçu sur ladite première fréquence ou si le niveau d'amplitude reçu pour cette première fréquence est supérieur audit seuil; et ceci jusqu'à ce qu'une fréquence soit libre, laquelle est alors sélectionnée comme fréquence propre,
ce procédé comprenant en outre les étapes suivantes:
- envoi d'un signal d'occupation de ladite fréquence propre sélectionnée, de manière à ce qu'elle ne soit pas prise ultérieurement par d'autres récepteurs-émetteurs agencés dans des espaces délimités voisins, au moins jusqu'au début d'une période de communication suivante et durant celle-ci, la communication durant cette période étant prévue à ladite fréquence propre et/ou dans ledit sous-ensemble de fréquences associé à cette fréquence propre;
- communication aux unités électroniques entrant et/ou sortant et/ou situées dans l'espace délimité considéré une information relative à ladite fréquence propre sélectionnée pour une communication à haute fréquence durant ladite période de communication suivante.

9. Procédé de communication selon la revendication 8, **caractérisé en ce que** la communication de l'information relative à ladite fréquence propre sélectionnée est effectuée à basse fréquence par des émetteurs situés aux entrées desdits espaces délimités.

10. Procédé selon la revendication 8 ou 9, **caractérisé en ce que** lors de ladite période préliminaire, un signal est émis en alternance avec l'écoute à une même fréquence dudit ensemble de fréquences, ladite sélection de ladite fréquence propre intervenant seulement après un certain nombre d'alternances écoute-émission.

11. Procédé selon la revendication 10, **caractérisé en ce que** la période des alternances écoute-émission est prévue différente pour chaque espace délimité.

12. Procédé selon la revendication 10 ou 11, **caractérisé en ce que**, dès qu'une fréquence propre est sélectionnée, lesdits moyens d'émission émettent sans interruption ledit signal d'occupation de cette fréquence propre de manière périodique ou continue.

13. Procédé selon l'une des revendications 8 à 12, **caractérisé en ce que** lesdits moyens d'écoute sont désactivés durant ladite période de communication.

## Claims

1. System for communication between a plurality of transceivers (7, 8, 10, 11), arranged respectively in a plurality of delimited spaces (W1, W2, W3, W4) each having at least one entrance, and portable electronic units (20, 22) fitted with means for radio-communication with said plurality of transceivers, in particular with a view to detecting each of these electronic units which penetrates one of said delimited spaces, **characterised in that** said transceivers and said electronic units are arranged to be able to communicate, among a set of given frequencies and/or frequency sub-sets respectively associated with said frequencies, at any frequency (F0 + nΔf) and/or frequencies of an associated sub-set of frequencies, each of said transceivers being associated with means for occupying a frequency exclusive thereto, said transceivers including:
- listening means (30, 32, 34, 36, 38, 46, 48) arranged to determine whether an occupied signal is present on any frequency among said set of frequencies and/or whether a given amplitude threshold is exceeded upon reception of said frequency;
- transmission means (30, 52, 54, 56, 58) arranged to transmit at any frequency of said set of frequencies; and
- means for selecting (42, 44, 38, 54), in a period prior to a period of communication with electronic units, an exclusive frequency among said set of frequencies which does not contain an occupied signal or whose received amplitude level is less than said threshold;
said transmission means transmitting at the selected exclusive frequency an occupied signal for said exclusive frequency at least periodically during at least said communication period, this system having means (62) for communicating information relative to said exclusive frequency to the portable units entering and/or exiting and/or located in the delimited space inside which the transceiver being considered is arranged.

2. System according to claim 1, **characterised in that** said exclusive frequency selection means include control means (42) for alternately activating said listening means and said transmission means at any frequency of said set of frequencies and means (44, 38, 54) for passing to another frequency of said set as soon as said occupied signal for this frequency is received by said listening means or the power level received on this frequency is greater than said threshold.

3. System according to claim 2, **characterised in that** the selection of an exclusive frequency only occurs after said listening means and transmitting means have been activated alternately several times, without said frequency being received by said listening means.

4. System according to claim 2 or 3, **characterised in that** the period of activation of said listening means is different for each transceiver of said system.

5. System according to any of the preceding claims, **characterised in that** said set of frequencies is in the high frequencies, said exclusive frequency selected for a transceiver being communicated to the low frequency electronic units by one or more transmitters placed respectively at said entrance or at the entrances to the delimited space of said transceiver.

6. System according to any of the preceding claims, **characterised in that** during said preliminary phase, said listening means are activated firstly at a frequency which was used for a previous communication.

7. System according to any of the preceding claims, **characterised in that** each frequency of said frequency set is associated with a sub-set of frequencies which are different from the other sub-sets of frequencies and also different from the frequencies of said frequency set, so as to allow a collision-avoidance protocol to be implemented which distributes the communication frequencies with said electronic units on frequencies of a sub-set of frequencies associated with said exclusive frequency.

8. Method of communication between transceivers (7, 8, 10, 11), arranged respectively in delimited spaces next to each other (W1, W2, W3, W4) or capable of being so at least temporarily and portable electronic units (20, 22) fitted with radio-communication means and capable of penetrating these delimited spaces, said transceivers and said electronic units being arranged to allow high frequency communication, among a set of given frequencies and/or sub-sets of frequencies respectively associated with said frequencies, at any frequency (F0 + nΔf) and/or frequencies of an associated sub-set of frequencies, this method having, for each transceiver, the following steps in a period prior to a high frequency communication period:
- listening at a first frequency of said set of frequencies to determine whether an occupied signal is present on this first frequency and/or whether a given amplitude threshold is exceeded for this first frequency;
- changing channel to listen at another frequency of said set of frequencies to determine whether an occupied signal is received on said first frequency or whether the amplitude level received for this first frequency is greater than said threshold; until a frequency is available, which is then selected as the exclusive frequency,
this method further including the following steps:
- sending an occupied signal for said selected exclusive frequency, so that it is not subsequently taken by transceivers arranged in neighbouring delimited spaces, at least during a subsequent period of communication at the selected exclusive frequency and/or at a frequency of said sub-set of frequencies associated with this exclusive frequency;
- communicating, to the electronic units entering and/or exiting and/or located in the delimited space being considered, information relative to the exclusive frequency selected for a high frequency communication.

9. Communication method according to claim 8, **characterised in that** the communication of information relative to said selected exclusive frequency is effected at a low frequency by transmitters located at the entrances to said delimited spaces.

10. Method according to claim 8 or 9, **characterised in that** during said preliminary period, a signal is transmitted alternately with listening at a same frequency of said set of frequencies, said selection of said exclusive frequency occurring only after a certain number of listening-transmitting alternations.

11. Method according to claim 10, **characterised in that** the period of listening-transmitting alternations is different for each delimited space.

12. Method according to claim 10 or 11, **characterised in that,** as soon as an exclusive frequency is selected, said transmitting means continue to transmit said signal at said exclusive frequency without interruption, periodically or continuously, until the start of said communication period and during the latter, this signal forming said occupied signal.

13. Method according to claims 8 to 12, **characterised in that** said listening means are deactivated during said communication period.

## Patentansprüche

1. System zur Kommunikation zwischen einer Mehrzahl von Empfängern/Sendern (7, 8, 10, 11), die in einer Mehrzahl von jeweiligen abgegrenzten Räumen (W1, W2, W3, W4) angeordnet sind, die jeweils zumindest einen Einlass und tragbare elektronische Einheiten (20, 22) aufweisen, die mit Mitteln zum Funkverkehr mit der Mehrzahl von Empfängern/Sendern ausgestattet sind, insbesondere zwecks Erfassung einer jeden dieser elektronischen Einheiten, die in einen der abgegrenzten Räume eingreift, **dadurch gekennzeichnet, dass** die Empfänger/Sender und die elektronischen Einheiten dazu vorgesehen sind, unter einer Menge von gegebenen Frequenzen (F0 + nΔf) und/oder unter Teilmengen von Frequenzen, die diesen jeweiligen Frequenzen zugeordnet sind, auf einer beliebigen Frequenz und/oder einer zugeordneten Teilmenge von Frequenzen zu kommunizieren, wobei jedem der Empfänger/Sender Mittel zum Belegen einer Eigenfrequenz zugeordnet sind, die aufweisen:
- Abhörmittel (30, 32, 34, 36, 38, 46, 48), die dazu vorgesehen sind, zu ermitteln, ob in einer vorläufigen Zeitspanne vor der Kommunikationszeit mit den elektronischen Einheiten ein Belegungssignal auf irgendeiner Frequenz unter der Menge von Frequenzen vorhanden ist und/oder ob ein gegebener Amplitudenschwellwert bei Empfang für diese Frequenz überschritten wird,
- Sendemittel (30, 52, 54, 56, 58), die dazu vorgesehen sind, auf irgendeiner Frequenz aus der Menge von Frequenzen zu senden,
- Mittel (42, 44, 38, 54), um in der vorläufigen Zeitspanne eine Eigenfrequenz aus der Menge von Frequenzen auszuwählen, die kein Belegungssignal enthält oder deren empfangener Amplitudenpegel unter dem Schwellwert liegt;
wobei die Sendemittel auf der ausgewählten Eigenfrequenz ein Belegungssignal für diese Eigenfrequenz zumindest periodisch bis zu Beginn der nächsten Kommunikationszeit und während derselben ausgeben, wobei dieses System Mittel (62) besitzt, um eine Information über die Eigenfrequenz an die tragbaren Einheiten zu übermitteln, die in den abgegrenzten Raum eingeführt und/oder herausgenommen werden und/oder sich darin befinden, in welchem der betreffende Empfänger/Sender angeordnet ist.

2. System nach Anspruch 1, **dadurch gekennzeichnet, dass** die Mittel zum Auswählen einer Eigenfrequenz Steuermittel (42) enthalten, um abwechselnd die Abhörmittel und die Sendemittel auf einer beliebigen Frequenz aus der Menge von Frequenzen zu aktivieren, sowie Mittel (44, 38, 54), um auf eine andere Frequenz dieser Menge überzugehen, sobald das Belegungssignal dieser Frequenz von den Abhörmitteln empfangen wird oder der auf dieser Frequenz empfangene Leistungspegel über dem Schwellwert liegt.

3. System nach Anspruch 2, **dadurch gekennzeichnet, dass** die Auswahl einer Eigenfrequenz erst nach mehreren Wechselfolgen zum Aktivieren der Abhörmittel und der Sendemittel erfolgt, ohne dass diese Frequenz von den Abhörmitteln empfangen wird.

4. System nach Anspruch 2 oder 3, **dadurch gekennzeichnet, dass** die Aktivierungsperiode der Abhörmittel für jeden Empfänger/Sender des Systems unterschiedlich vorgesehen ist.

5. System nach einem der vorangehenden Ansprüche, **dadurch gekennzeichnet, dass** die Menge von Frequenzen bei den Hochfrequenzen liegt, wobei die für einen Empfänger/Sender ausgewählte Eigenfrequenz den elektronischen Einheiten mit Niederfrequenz über einen oder mehrere Sender übermittelt wird, die am Einlass bzw. an den Einlässen des abgegrenzten Raums dieses Empfängers/Senders platziert sind.

6. System nach einem der vorangehenden Ansprüche, **dadurch gekennzeichnet, dass** bei der vorläufigen Phase die Abhörmittel zurächst auf einer Frequenz aktiviert werden, die bei einer vorausgegangenen Kommunikationszeit gedient hat.

7. System nach einem der vorangehenden Ansprüche, **dadurch gekennzeichnet, dass** jede Frequenz der Menge von Frequenzen einer Teilmenge von Frequenzen zugeordnet ist, die sich von den Frequenzen der weiteren Teilmengen von Frequenzen und auch von den Frequenzen der Frequenzmenge unterscheiden, so dass es möglich ist, ein Antikollisionsprotokoll zu erstellen, das die Kommunikationsfrequenzen mit den elektronischen Einheiten über die Teilmenge von der Eigenfrequenz zugeordneten Frequenzen verteilt.

8. Verfahren zur Kommunikation zwischen Empfängern/Sendern (7, 8, 10, 11), die jeweils in abgegrenzten Räumen (W1, W2, W3, W4) angeordnet sind, die einander benachbart sind oder zumindest vorübergehend sein können, und tragbaren elektronischen Einheiten (20, 22), die mit Funkverkehrsmitteln ausgestattet sind und in diese abgegrenzten Räume eingreifen können, wobei die Empfänger/Sender und die elektronischen Einheiten dazu vorgesehen sind, eine Kommunikation mit Hochfrequenz aus einer Menge von gegebenen Frequenzen und/oder aus Teilmengen von Frequenzen, die diesen Frequenzen jeweils zugeordnet sind, zu gestatten, und zwar auf einer beliebigen Frequenz (F0 + nΔf) und/oder einer zugeordneten Teilmenge von Frequenzen, wobei dieses Verfahren für jeden Empfänger/Sender die nachfolgenden Schritte in einer Zeitspanne vor einer Hochfrequenz-Kommunikationszeit umfasst:
- Abhören auf einer ersten Frequenz aus der Teilmenge von Frequenzen, um zu ermitteln, ob ein Belegungssignal auf dieser ersten Frequenz vorhanden ist und/oder ob ein gegebener Amplitudenschwellwert für diese erste Frequenz überschritten ist,
- Kanalwechsel, um auf einer weiteren Frequenz aus der Menge von Frequenzen abzuhören, ob ein Belegungssignal auf der ersten Frequenz empfangen wird oder ob der für diese erste Frequenz empfangene Amplitudenpegel über dem Schwellwert liegt, solange, bis eine Frequenz frei ist, die dann als Eigenfrequenz ausgewählt wird,
wobei dieses Verfahren ferner die nachfolgenden Schritte umfasst:
- Senden eines Belegungssignals der ausgewählten Eigenfrequenz, so dass sie nicht später von weiteren, in den benachbarten abgegrenzten Räumen angeordneten Empfängern/Sendern eingenommen wird, und zwar zumindest bis zu Beginn einer nachfolgenden Kommunikationszeit und während derselben, wobei die während dieser Zeitspanne andauernde Kommunikation auf der Eigenfrequenz und/oder auf der dieser Eigenfrequenz zugeordneten Teilmenge von Frequenzen vorgesehen ist,
- Übermittlung einer Information über die für eine Hochfrequenzkommunikation während der nachfolgenden Kommunikationszeit ausgewählte Eigenfrequenz an die elektronischen Einheiten, die in die betreffenden abgegrenzten Raum eingeführt und/oder herausgenommen werden und/oder sich darin befinden.

9. Kommunikationsverfahren nach Anspruch 8, **dadurch gekennzeichnet, dass** die Übermittlung der Information über die ausgewählte Eigenfrequenz in Niederfrequenz über Sender erfolgt, die an den Einlässen der abgegrenzten Räume liegen.

10. Verfahren nach Anspruch 8 oder 9, **dadurch gekennzeichnet, dass** bei der vorläufigen Zeitspanne ein Signal abwechselnd mit dem Abhören auf gleicher Frequenz aus der Menge von Frequenzen ausgegeben wird, wobei die Auswahl der Eigenfrequenz erst nach einer bestimmten Anzahl von Abhör-Sende-Wechselfolgen erfolgt.

11. Verfahren nach Anspruch 10, **dadurch gekennzeichnet, dass** die Periode der Abhör-Sende-Wechselfolgen für jeden abgegrenzten Raum unterschiedlich vorgesehen ist.

12. Verfahren nach Anspruch 10 oder 11, **dadurch gekennzeichnet, dass** sobald eine Eigenfrequenz ausgewählt ist, die Sendemittel das Belegungssignal dieser Eigenfrequenz ohne Unterbrechung periodisch oder kontinuierlich senden.

13. Verfahren nach einem der Ansprüche 8 bis 12, **dadurch gekennzeichnet, dass** die Abhörmittel während der Kommunikationszeit deaktiviert sind.
